# EUROPÄISCHE PATENTANMELDUNG

(11) **EP 0 765 911 A2**
(43) Veröffentlichungstag der Anmeldung: **02.04.1997**
(21) Anmeldenummer: 96114710.5
(22) Anmeldetag: 13.09.1996
(51) Int. Cl.: C08L 67/00, C08L 69/00, C08L 75/06, C08L 77/12, C08L 1/00, C08L 97/02, C08K 3/00

(54) **Mit Verstärkungsstoffen gefüllte biologisch abbaubare Kunststoffe**

(30) Priorität: 26.09.1995 DE 19535715; 15.11.1995 DE 19542498; 20.12.1995 DE 19547636; 22.01.1996 DE 19601912
(71) Anmelder: BAYER AG, 51368 Leverkusen (DE)
(72) Erfinder: Grigat, Ernst, Dr., 51381 Leverkusen (DE); Müller, Hanns Peter, Dr., 51519 Odenthal (DE); Schulz-Schlitte, Wolfgang, Dr., 40764 Langenfeld (DE); El Sayed, Aziz, Dr., 51375 Leverkusen (DE); Timmermann, Ralf, Dr., 47800 Leverkusen (DE)

(57) **Zusammenfassung**

Die Erfindung betrifft verstärkte thermoplastische Formmassen aus biologisch abbaubaren Polymeren, z.B. aliphatische Polyesteramide, aliphatische Polyesterurethane sowie deren Verwendung zur Herstellung von Formkörpern sowie die Formkörper, wobei die Verstärkungsstoffe ausgewählt sind aus Holzmehl, Fasern natürlicher Herkunft, Mineralien natürlicher Herkunft, Cellulose und Cellulosederivate.

## Beschreibung

Biologisch abbaubare Kunststoffe sind bekannt (siehe beispielsweise EP-A 561 224). Das Einbringen von Füllstoffen in thermoplastische Kunststoffe ist ebenfalls bekannt (siehe beispielsweise Römpp-Chemielexikon, 9. Auflage, Thieme Verlag, Stichwort "Füllstoffe"). Üblicherweise führt das Einbringen von Füllstoffen in thermoplastische Kunststoffe zu einer Erhöhung der Steifigkeit, gemessen am Zug-E-Modul, ca. um den Faktor 2. Holzmehl kann in vielen Thermoplasten nicht als Füllstoff verwendet werden, da es sich bei der Verarbeitung bei höheren Temperaturen zersetzt. Glasfasern sind beispielsweise nicht biologisch abbaubar und gehören auch nicht zu den Stoffen, die nach einer Kompostierung eines biologisch abbaubaren Materials im Kompost erwünscht sind. Cellulose oder Cellulosederivate können in vielen Thermoplasten nicht als Füllstoff verwendet werden, da sie sich bei der Verarbeitung bei höheren Temperaturen zersetzen.

Gegenstand der vorliegenden Erfindung sind verstärkte thermoplastische Formmassen aus biologisch abbaubaren Polymeren, ein Verfahren zur Herstellung dieser verstärkten Formmassen sowie die Verwendung der erfindungsgemäß verstärkten thermoplastischen Formmassen als biologisch abbaubare Werkstoffe zur Herstellung von beispielsweise Spritzgußformteilen. Die Formkörper zeichnen sich durch ein hervorragendes Eigenschaftsprofil, wie beispielsweise Zug-E-Modul, Zähigkeit und Festigkeit aus.

Als biologisch abbaubare und kompostierbare Polymere kommen aliphatische oder teilaromatische Polyester, thermoplastische aliphatische oder teilaromatische Polyesterurethane, aliphatisch-aromatische Polyestercarbonate, aliphatische Polyesteramide in Frage.

Die folgenden Polymere sind geeignet:
Aliphatische oder teilaromatische Polyester aus
A) linearen bifunktionellen Alkoholen wie beispielsweise Ethylenglykol, Hexandiol oder bevorzugt Butandiol und/oder gegebenenfalls cycloaliphatischen bifunktionellen Alkoholen wie beispielsweise Cyclohexandimethanol und/oder geringen Mengen an verzweigten bifunktionellen Alkoholen wie beispielsweise Neopentylglykol und zusätzlich gegebenenfalls geringen Mengen höherfunktionellen Alkoholen wie beispielsweise 1,2,3-Propantriol oder Trimethylolpropan sowie aus aliphatischen bifunktionellen Säuren wie beispielsweise und bevorzugt Bernsteinsäure oder Adipinsäure und/oder gegebenenfalls aromatischen bifunktionellen Säuren wie beispielsweise Terephthalsäure oder Isophthalsäure oder Naphthalindicarbonsäure und zusätzlich gegebenenfalls geringen Mengen höherfunktionellen Säuren wie beispielsweise Trimellitsäure oder
B) aus säure- und alkoholfunktionalisierten Bausteinen, beispielsweise Hydroxybuttersäure oder Hydroxyvaleriansäure oder Milchsäure oder deren Derivaten, beispielsweise ε-Caprolacton oder Dilactid
oder einer Mischung oder einem Copolymer aus A und B
wobei die aromafischen Säuren nicht mehr als 50 Gew.-% Anteil, bezogen auf alle Säuren, ausmachen.

Die Säuren können auch in Form von Derivaten wie beispielsweise Säurechloride oder Ester eingesetzt werden;
Aliphatische oder teilaromatische Polyesterurethane aus
C) einem Esteranteil aus linearen bifunktionellen Alkoholen wie beispielsweise Ethylenglykol, Butandiol, Hexandiol, bevorzugt Butandiol, und/oder gegebenenfalls cycloaliphatischen bifunktionellen Alkoholen wie beispielsweise Cyclohexandimethanol und/oder gegebenenfalls geringen Mengen an verzweigten bifunktionellen Alkoholen wie beispielsweise Neopentylglykol und zusätzlich gegebenenfalls geringen Mengen höherfunktionellen Alkoholen wie beispielsweise 1,2,3-Propantriol oder Trimethylolpropan sowie aus aliphatischen bifunktionellen Säuren wie beispielsweise Bernsteinsäure oder Adipinsäure und/oder aromatischen bifunktionellen Säuren wie beispielsweise Cyclohexandicarbonsäure oder Terephthalsäure und zusätzlich gegebenenfalls geringen Mengen höherfunktionellen Säuren wie beispielsweise Trimellitsäure oder
D) aus einem Esteranteil aus säure- und alkoholfunktionalisierten Bausteinen, beispielsweise Hydroxybuttersäure oder Hydroxyvaleriansäure oder Milchsäure oder deren Derivaten, beispielsweise ε-Caprolacton oder Dilactid,
oder einer Mischung oder einem Copolymer aus C) und D), und
E) aus dem Reaktionsprodukt von C) und/oder D) mit aliphatischen und/oder cycloaliphatischen bifunktionellen und zusätzlich gegebenenfalls höherfunktionellen Isocyanaten, z.B. Tetramethylendiisocyanat, Hexamethylendiisocyanat, Isophorondiisocyanat, gegebenenfalls zusätzlich mit linearen und/oder verzweigten und/oder cycloaliphatischen bifunktionellen und/oder höherfunktionellen Alkoholen, z.B. Ethylenglykol, Butandiol, Hexandiol, Neopentylglykol, Cyclohexandimethanol,
wobei der Esteranteil C) und/oder D) mindestens 75 Gew.-% und der Anteil an Urethan-Segmenten maximal 25 Gew.-%, bezogen auf die Summe aus C), D) und E) beträgt;
Aliphatisch-aromatische Polyestercarbonate aus
F) einem Esteranteil aus linearen bifunktionellen Alkoholen wie beispielsweise Ethylenglykol, Butandiol, Hexandiol, bevorzugt Butandiol, und/oder gegebenenfalls cycloaliphatischen bifunktionellen Alkoholen wie beispielsweise Cyclohexandimethanol und/oder gegebenenfalls geringen Mengen an verzweigten bifunktionellen Alkoholen wie beispielsweise Neopentylglykol und zusätzlich gegebenenfalls geringen Mengen höherfunktionellen Alkoholen wie beispielsweise 1,2,3-Propantriol oder Trimethylolpropan sowie aus linearen bifunktionellen Säuren wie beispielsweise Bernsteinsäure oder Adipinsäure und/oder gegebenenenfalls cycloaliphatischen bifunktionellen Säuren wie beispielsweise Cyclohexandicarbonsäure und/oder gegebenenfalls geringen Mengen an verzweigten bifunktionellen Säuren und zusätzlich gegebenenfalls geringen Megen höherfunktionellen Säuren wie beispielsweise Trimellitsäure oder
G) aus einem Esteranteil aus säure- und alkoholfunktionalisierten Bausteinen, beispielsweise Hydroxybuttersäure oder Hydroxyvaleriansäure, oder deren Derivaten, beispielsweise ε-Caprolacton,
oder einer Mischung oder einem Copolymer aus F) und G) und
H) einem Carbonatanteil, der aus aromatischen bifunktionellen Phenolen, bevorzugt Bisphenol-A und Carbonatspendern, beispielsweise Phosgen, hergestellt wird,
wobei der Esteranteil F) und/oder G) mindestens 70 Gew.-%, bezogen auf die Summe aus F), G) und H) beträgt;
Aliphatische Polyesteramide aus
I) einem Esteranteil aus linearen und/oder cycloaliphatischen sowie gegebenenfalls zusätzlich geringen Mengen an verzweigten bifunktionellen Alkoholen wie beispielsweise Ethylenglykol, Hexandiol, Butandiol, bevorzugt Butandiol, Cyclohexandimethanol, und zusätzlich gegebenenfalls geringen Mengen höherfunktionellen Alkoholen, z.B. 1,2,3-Propantriol oder Trimethylolpropan, sowie aus linearen und/oder cycloaliphatischen sowie gegebenenfalls zusätzlich geringen Mengen an verzweigten bifunktionellen Säuren, z.B. Bernsteinsäure, Adipinsäure, Cyclohexandicarbonsäure, bevorzugt Adipinsäure und zusätzlich gegebenenfalls geringen Mengen höherfunktionellen Säure, z.B. Trimellitsäure, oder
K) aus einem Esteranteil aus säure- und alkoholfunktionalisierten Bausteinen, beispielsweise Hydroxybuttersäure, oder Hydroxyvaleriansäure oder Milchsäure, oder deren Derivaten, beispielsweise ε-Caprolacton oder Dilactid,
oder einer Mischung oder einem Copolymer aus I) und K), und
L) einem Amidanteil aus linearen und/oder cycloaliphatischen sowie gegebenenfalls zusätzlich geringen Mengen an verzweigten bifunktionellen und zusätzlich gegebenenfalls geringen Mengen höherfunktionellen Aminen, z.B. Tetramethylendiamin, Hexamethylendiamin, Isophorondiamin, sowie aus linearen und/oder cycloaliphatischen sowie gegegebenenfalls zusätzlich geringen Mengen an verzweigten bifunktionellen und zusätzlich gegebenenfalls geringen Mengen höherfunktionellen Säuren, z.B. Bernsteinsäure oder Adipinsäure, oder
M) aus einem Amidanteil aus säure- und aminfunktionalisierten Bausteinen, bevorzugt ω-Laurinlactam und besonders bevorzugt ε-Caprolactam,
oder einer Mischung aus L) und M) als Amidanteil, wobei
der Esteranteil I) und/oder K) mindestens 30 Gew.-%, bezogen auf die Summe aus I), K), L) und M) beträgt.

Die biologisch abbaubaren Copolyester, Polyestercarbonate, Polyesterurethane und Polyesteramide haben ein Molgewicht von mindestens 10.000 g/mol und besitzen eine statistische Verteilung der Ausgangsstoffe (Monomere) im Polymer.

Unter den genannten biologisch abbaubaren Polymeren sind bevorzugt Polyesteramide, Polyesterurethane und Polyestercarbonate, besonders bevorzugt Polyesteramide.

Die erfindungsgemäße Eigenschaft der Kompostierbarkeit wird wie folgt definiert:

Die zu testenden Polymere werden in einem Flüssigmedium nach ASTM G 22 (Zusammensetzung Tabelle 1) mit einer Mischung von Mikroorganismen aus Gartenkompost unter Schwenken (220 upm) und Luftzutritt bei 37°C inkubiert. Hierzu wird ca. 1 g des Polymeren in mehreren cm -großen Stücken in 250 ml Nährsalz-Lösung in 1 l Erlenmeyerkolben mit 2 ml einer Suspension von 10 g Gartenkompost in 100 ml Nährsalzlösung beimpft. Aus der Kompostsuspension werden vorher grobe Teile über ein Feinsieb abgetrennt. Die Trockensubstanz (TS)-Gehalt der Animpfmenge beträgt dann ca. 50 mg. Als Kontrolle zur Messung des abiotischen Gewichtsverlusts der Polymerprobe wird ein Ansatz mit HgCl₂ (500 mg/l) versetzt. Weitere Kontrollansätze enthalten Cellulose (4 g/l, Typ DP 500, Fa. Wolff Walsrode) zur Überprüfung des Wachstums mit einem natürlichen Substrat bzw. werden ohne Zusatz einer C-Quelle zur Bestimmung des Hintergrundwachstums und der TS-Abnahme des Inokulums angesetzt.

**Tabelle 1**

| Zusammensetzung der Nährsalzlösung nach ASTM G22 | |
|---|---|
| KH₂PO₄ | 0,7 g |
| K₂HPO₄ | 0,7 g |
| MgSO₄ · 7H₂O | 0,7 g |
| NH₄NO₃ | 1,0 g |
| NaCl | 0,005 g |
| FeSO₄ · 7H₂O | 0,002 g |
| ZnSO₄ · 7H₂O | 0,002 g |
| MnSO₄ · H₂O | 0,001 g |
| H₂O dest. | 1000,0 ml |

Zur Bestimmung des TS-Gehaltes der wasserunlöslichen Anteile (Polymer bzw. Polymerreste, Biomasse und Inokulum) wird der gesamte Inhalt eines Kolbens abzentrifugiert, einmal in 0,05 M Phosphatpuffer gewaschen und der unlösliche Rest bei 80°C mindestens 48 h getrocknet. In Parallelkolben wird die Biomasse und das reine Inokulum bestimmt. Durch Subtraktion dieser Meßgrößen kann der Anteil der Polymerreste errechnet werden.

Zur Messung der Biomasse wird ebenfalls der gesamte Inhalt eines Kolbens aufgearbeitet. Hierzu wird eine Modifizierung der Adenosintriphosphat(ATP)-Bestimmung der Firma Lumac-3M verwendet: 10 Minuten nach der Zugabe des Reaktivreagenzes (Lumac) werden 2,5 ml einer 33 %igen Tetrabutylammoniumhydroxydlösung zugegeben. Dies führt zu einer vollständigen ATP-Freisetzung aus der gesamten Biomasse innerhalb von 30 Sekunden. Nach dieser Zeit kann der ATP-Gehalt mit der üblichen Luciferin/Luciferase-Reaktion nach Angaben von Lumac bestimmt werden. Zur Korrelation des ATP-Gehaltes mit der Trockensubstanz wird eine 24 h-Kultur von Kl. planticola mitgemessen, deren ATP/TS-Verhältnis vorher bestimmt wird.

Als gut kompostierbar im erfindungsgemäßen Sinn werden alle Proben bezeichnet, die unter den oben genannten Bedingungen innerhalb von maximal zwei Wochen ein Biomassewachstum auf dem Polymeren von mindestens 30 mg/l ermöglichen.

Nicht kompostierbar im erfindungsgemäßen Sinn sind Proben, die unter den obengenannten Bedingungen innerhalb von maximal 2 Wochen ein Biomassewachstum von höchstens 5 mg/l ermöglichen.

Die Verstärkungsstoffe sind ausgewählt aus der folgenden Gruppe: Holzmehl, Fasern natürlicher Herkunft (Naturfasern), Mineralien natürlicher Herkunft, Cellulose und Cellulosederivate.

Holzmehl im erfindungsgemäßen Sinn ist mechanisch zerkleinertes Holz mit einer Kantenlänge von maximal 3 mm, bevorzugt maximal 1 mm, besonders bevorzugt maximal 0,5 mm. Aus technischen Gründen gibt es keine Einschränkungen in der Holzsorte, aus toxikologischen Gründen wird Holzmehl bevorzugt, das nicht von Eichen, Buchen oder Tropenhölzern stammt.

Die thermoplastischen Formmassen enthalten im allgemeinen 0,1 Gew.-% bis 80 Gew.-%, bevorzugt 25 Gew.-% bis 65 Gew.-%, besonders bevorzugt 32 Gew.-% bis 44 Gew.-% Holzmehl.

Gegenstand der Erfindung ist ebenfalls ein Verfahren zur Herstellung der erfindungsgemäßen gefüllten bzw. verstärkten thermoplatischen Formmassen, dadurch gekennzeichnet, daß das Holzmehl auf einen Wassergehalt von höchstens 5 Gew.-%, bevorzugt höchstens 1 Gew.-%, getrocknet wird und z.B. in einem Kneter oder vorzugsweise Extruder mit dem biologisch abbaubaren Polymer innig vermischt wird.

Als Verstärkungsstoff im Sinne der vorliegenden Erfindung sind Fasern natürlicher Herkunft (Naturfasern) geeignet, die eine Mindestlänge von 1 mm bei einem Länge/Durchmesserverhältnis von mindestens 10 aufweisen. Bevorzugt sind Fasern pflanzlichen Ursprungs, darunter besonders bevorzugt die Fasern von Hanf, Flachs, Ramie und Sisal.

Die Fasern müssen in faseriger Form vorliegen (also nicht beispielsweise wie in Pflanzen zusammengeballt) und von anhaftenden Verunreinigungen befreit sein. Eine Anforderung an die Höchstlänge besteht nicht.

Die thermoplastischen Formmassen enthalten im allgemeinen 0,1 Gew.-% bis 80 Gew.-%, bevorzugt 11 Gew.-% bis 65 Gew.-%, besonders bevorzugt 17 Gew.-% bis 35 Gew.-% Naturfasern.

Gegenstand der Erfindung ist ebenfalls ein Verfahren zur Herstellung der erfindungsgemäßen verstärkten thermoplastischen Formmassen, dadurch gekennzeichnet, daß Naturfasern auf einen Wassergehalt von höchstens 5 Gew.-%, bevorzugt höchstens 2 Gew.-%, getrocknet werden und z.B. in einem Kneter oder vorzugsweise Extruder mit dem biologisch abbaubaren Polymer innig vermischt werden.

Als Füllstoff im Sinne der vorliegenden Erfindung sind Mineralien natürlicher Herkunft geeignet, die in puderiger Form, wie sie zum Einbringen in nicht biologisch abbaubare thermoplastische Kunsstoffe üblich ist, eingesetzt werden.

Unter den mineralischen Füllstoffen sind beispielsweise und bevorzugt Gips, Wollastonit, und besonders bevorzugt Kreide und Kaolin genannt.

Die erfindungsgemäßen thermoplastischen Formmassen enthalten 1 Gew.-% bis 80 Gew.-%, bevorzugt 10 Gew.-% bis 65 Gew.-%, besonders bevorzugt 20 Gew. % bis 40 Gew.-% Mineralien natürlicher Herkunft.

Gegenstand der Erfindung ist ebenfalls ein Verfahren zur Herstellung der erfindungsgemäßen verstärkten thermoplastischen Formmassen, dadurch gekennzeichnet, daß die Mineralien natürlicher Herkunft z.B. in einem Kneter oder vorzugsweise Extruder mit dem biologisch abbaubaren Polymer innig vermischt werden.

Als Füll- oder Verstärkungsstoffe im erfindungegmäßen Sinn sind auch Cellulose oder Cellulosederivate geeignet.

Cellulose im erfindungsgemäßen Sinn ist definiert nach Römpp-Chemielexikon, 9. Auflage, Stichwort "Cellulose". Im Handel ist Cellulose z.B. erhältlich als Cellulose mikroktistallin unter dem Warenzeichen Avicel®, Fa. E. Merck.

Unter Cellulose im erfindungsgemäßen Sinn sind auch Papiermehl und Zellstoff (technisch aufgearbeitete Cellulose) zu verstehen. Papiermehl ist zu Papier aufgearbeitete Cellulose mit entsprechenden Zusatzstoffen. Bevorzugt geeignetes Papiermehl ist z.B. solches, dessen Bestandteile Kantenlängen unter 1 mm, besonders bevorzugt unter 0,2 mm haben.

Cellulosederivate im erfindungsgemäßen Sinn sind Celluloseether wie Methylcellulose, Ethylcellulose, Dihydroxypropylcellulose, Hydroxybutylcellulose, Methylhydroxyethylcellulose, Methylhydroxypropylcellulose, Methylhydroxybutylcellulose, Ethylhydroxypropylcellulose, Ethylhydroxyethylcellulose, Carboxyalkylcellulose, Sulfoalkylcellulose, Cyanoethylcellulose, deren Herstellung in Enzyclopedia of polymer science and engineering, Wiley N.Y. 1985 Vol. 3, S. 242 ff. beschrieben ist. Als Epoxide eignen sich bevorzugt Monoepoxide wie Ethylenoxid, Propylenoxid, 1,2-Epoxybutan, 1,2-Epoxyhexan, 1,2-Epoxyoctan, 1,2-Epoxydecan, 1,2-Epoxydodecan, 1,2-Epoxyhexadecan, 1,2-Epoxyoctadecan, Stearinsäureglycylether, Epoxybutylstearat, Laurylglycidylether, Glycidylmethylether, Glycidylethylether, Glycidylpropylether, Glycidylbutylether, Glycidyltertiärbutylether, Glycidylacrylat, Glycidylmethacrylat, Allylglycidylether, Butadienmonooxid, Glycidol, 3-Glycidoxypropyltrimethoxysilan, 3-Glycidoxypropyltriethoxysilan, Di-N-Butylamino-2,3-epoxypropan, Diethyl-2,3-epoxypropylphosphat, 4-(2,3-epoxypropyl)-morpholin und Styroloxid.

Unter den Cellulosederivaten sind besonders bevorzugt Celluloseether wie z.B. Hydroxyethylcellulose oder Hydroxypropylcellulose.

Die thermoplastischen Formmassen enthalten im allgemeinen 0,1 Gew.-% bis 80 Gew.-%, bevorzugt 20 Gew.-% bis 65 Gew.-%, besonders bevorzugt 26 Gew.-% bis 44 Gew.-% Cellulose oder Cellulosederivate.

Gegenstand der Erfindung ist ebenfalls ein Verfahren zur Herstellung der erfindungsgemäßen gefüllten bzw. verstärkten thermoplastischen Formmassen, dadurch gekennzeichnet, daß die Cellulose oder Cellulosederivate z.B. in einem Kneter oder vorzugsweise Extruder mit dem biologisch abbaubaren Polymer innig vermischt werden.

Gegenstand der Erfindung ist weiterhin die Verwendung von Verstärkungsstoffen, ausgewählt aus der Gruppe von Holzmehl, Fasern natürlicher Herkunft, Mineralien natürlicher Herkunft, Cellulose und Cellulosederivate zur Verstärkung von biologisch abbaubaren Kunststoffen.

Die erfindungsgemäßen thermoplastischen Formmassen können mit Verarbeitungshilfsmitteln wie beispielsweise Nukleierungshilfsmitteln, Entformungshilfsmitteln oder Stabilisatoren ausgestattet sein, wobei darauf zu achten ist, daß die vollständige Kompostierbarkeit nicht beeinträchtigt wird oder die verbliebenen Substanzen, beispielsweise mineralische Hilfsmittel, im Kompost unschädlich sind.

Gegenstand der Erfindung sind ebenfalls aus den erfindungsgemäßen thermoplastischen Formmassen hergestellten Formkörper, Formteile, Extrudate oder Schäume, die beispielsweise als Blumentöpfe, Pflanztöpfe, Pflanzbinder, Kranzversteifungen, Grablichtumhüllungen, Folien, Profile, Särge oder Sargbestandteile genutzt werden können.

### Beispiele

Das in den Beispielen verwendete Polyesteramid aus 60 Gew.-% Anteilen Polycaprolactam und 40 Gew.-% Anteilen eines Esters aus Adipinsäure und Butandiol hat eine relative Lösungsviskosität von 2,5, gemessen an einer 1 %igen Lösung in m-Kresol bei 20°C.

### Beispiel 1 A

60 Gew.-% biologisch abbaubares Polyesteramid aus 60 Gew.-% Anteilen Polycaprolactam und 40 Gew.-% Anteilen eines Esters aus Adipinsäure und Butandiol werden mit 40 Gew.-% Holzmehl auf einem Zweiwellenextruder Brabender DSE 32 mit 10 kg/h bei einer Drehzahl von 150 Upm und 209°C Massetemperatur compoundiert und danach zu Prüfkörpern verspritzt.

Die Prüfung ergibt einen Zug-E-Modul von 1505 +/- 16 N/mm², gemessen nach DIN 53 457, und eine Schlagzähigkeit von 28,2 +/- 1,5 kJ/m², gemessen nach ISO 180-1C.

### Beispiel 1 B

65 Gew.-% biologisch abbaubares Polyesteramid gemäß Beispiel 1A wird mit 35 Gew.-% Holzmehl auf einem Zweiwellenextruder ZSK 32/14 mit 10 kg/h bei einer Drehzahl von 150 Upm und 178°C Massetemperatur compoundiert und zu Prüfkörpern verspritzt.

Die Prüfung ergibt einen Zug-E-Modul von 1410 ± 2 N/mm² gemessen nach DIN 53 457 und eine Schlagzähigkeit von 40,6 ± 10,2 kJ/m², gemessen nach ISO 180-1C`

### Beispiel 2

70 Gew.-% biologisch abbaubares Polyesteramid aus 60 Gew.-% Anteilen Polycaprolactam und 40 Gew.-% Anteilen eines Esters aus Adipinsäure und Butandiol (relative Lösungsviskosität: 2,5, gemessen an einer 1 Gew.-%igen Lösung in meta-Kresol bei 20°C) werden mit 30 Gew.-% Hanffasern auf einem Zweiwellenextruder ZSK 32/14 mit 5,5 kg/h und 176°C Massetemperatur compoundiert und danach zu Prüfkörpern verspritzt.

Die Prüfung ergibt einen Zug-E-Modul von 1112 +/- 19 N/mm², gemessen nach DIN 53 457, und eine Schlagzähigkeit von 52,2 +/- 5,2 kJ/m², gemessen nach ISO 180-1C.

### Beispiel 3 A

60 Gew.-% biologisch abbaubares Polyesteramid aus 60 Gew.-% Anteilen Polycaprolactam und 40 Gew.-% Anteilen eines Esters aus Adipinsäure und Butandiol werden mit 40 Gew.-% Kaolin auf einem Zweiwellenextruder ZSK 32/14 mit 10 kg/h und 168°C Massetemperatur compoundiert und danach zu Prüfkörpern verspritzt.

Die Prüfung ergibt einen Zug-E-Modul von 599 +/- 70 N/mm², gemessen nach DIN 53 457, und eine Schlagzähigkeit von "nicht gebrochen", gemessen nach ISO 180-1C.

### Beispiel 3 B

50 Gew.-% biologisch abbaubares Polyesteramid aus 60 Gew.-% Anteilen Polycaprolactam und 40 Gew.-% Anteilen eines Esters aus Adipinsäure und Butandiol werden mit 50 Gew.-% Kaolin auf einem Zweiwellenextruder ZSK 32/14 mit 10 kg/h und 170°C Massetemperatur compoundiert und danach zu Prüfkörpern verspritzt.

Die Prüfung ergibt einen Zug-E-Modul von 716 +/- 74 N/mm², gemessen nach DIN 53 457, und eine Schlagzähigkeit von "nicht gebrochen", gemessen nach ISO 180-1C.

### Beispiel 4 A

Biologisch abbaubares Polyesteramid aus 60 Gew.-% Anteilen Polycaprolactam und 40 Gew.-% Anteilen eines Esters aus Adipinsäure und Butandiol werden mit 40 Gew.-% Cellulose-Mikrokristallin (Avicel®, Fa. E. Merck) auf einem Zweiwellenextruder ZSK 32/14 mit 10 kg/h bei einer Drehzahl von 150 Upm und 174°C Massetemperatur compoundiert und danach zu Prüfkörpern verspritzt.

Die Prüfung ergibt einen Zug-E-Modul von 1030 N/mm², gemessen nach DIN 53457, und eine Schlagzähigkeit von 33,0 kJ/m², gemessen nach ISO 180-1C.

### Beispiel 4 B

Biologisch abbaubares Polyesteramid aus 60 Gew.-% Anteilen Polycaprolactam und 40 Gew.-% Anteilen eines Esters aus Adipinsäure und Butandiol werden mit 50 Gew.-% Cellulose-Mikrokristallin (Avicel®, Fa. E. Merck) auf einem Zweiwellenextruder ZSK 32/14 mit 10 kg/h bei einer Drehzahl von 150 Upm und 177°C Massetemperatur compoundiert und danach zu Prüfkörpern verspritzt.

Die Prüfung ergibt einen Zug-E-Modul von 1689 N/mm², gemessen nach DIN 53457, und eine Schlagzähigkeit von 22,0 kJ/m², gemessen nach ISO 180-1C.

### Beispiel 5

Biologisch abbaubares Polyesteramid aus 60 Gew.-% Anteilen Polycaprolactam und 40 Gew.-% Anteilen eines Esters aus Adipinsäure und Butandiol wird mit 40 Gew.-% Hydroxypropylcellulose compoundiert und danach zu Prüfkörpern verspritzt.

Die Prüfung ergibt einen Zug-E-Modul von 1420 N/mm², gemessen nach DIN 53 457.

### Beispiel 6 (Vergleichsbeispiel)

Prüfkörper aus reinem Polyesteramid aus 60 Gew.-% Anteilen Polycaprolactam und 40 Gew.-% Anteilen eines Esters aus Adipinsäure und Butandiol (relative Lösungsviskosität: 2,5, gemessen an einer 1 %igen Lösung in Meta-Kresol bei 20°C) haben einen Zug-E-Modul von 200 N/mm² (gemessen nach DIN 53 457) und eine Schlagzähigkeit von "nicht gebrochen" (gemessen nach ISO 180-1C)

## Patentansprüche

1. Verstärkte thermoplastische Formmassen enthaltend biologisch abbaubare Polymere, ausgewählt aus der Gruppe der aliphatischen oder teilaromatischen Polyester, thermoplastischen aliphatischen Polyesterurethane, aliphatisch-aromatischen Polyestercarbonate, aliphatischen Polyesteramide, wobei die Verstärkungsstoffe ausgewählt sind aus der Gruppe von Holzmehl, Fasern natürlicher Herkunft, Mineralien natürlicher Herkunft, Cellulose und Cellulosederivate.

2. Formmassen gemäß Anspruch 1, wobei als Polymere eingesetzt werden:
Aliphatische oder teilaromatische Polyester aus
A) linearen bifunktionellen Alkoholen und/oder gegebenenfalls cycloaliphatischen bifunktionellen Alkoholen und/oder geringen Mengen an verzweigten bifunktionellen Alkoholen und zusätzlich gegebenenfalls geringen Mengen höherfunktionellen Alkoholen sowie aus aliphatischen bifunktionellen Säuren und/oder gegebenenfalls aromatischen bifunktionellen Säuren und zusätzlich gegebenenfalls geringen Mengen höherfunktionellen Säuren oder
B) aus säure- und alkoholfunktionalisierten Bausteinen,
oder einer Mischung oder einem Copolymer aus A und B
wobei die aromatischen Säuren nicht mehr als 50 Gew.-% Anteil, bezogen auf alle Säuren, ausmachen, wobei
die Säuren können auch in Form von Derivaten eingesetzt werden;
Aliphatische oder teilaromatische Polyesterurethane aus
C) einem Esteranteil aus linearen bifunktionellen Alkoholen und/oder gegebenenfalls cycloaliphatischen bifunktionellen Alkoholen und/oder gegebenenfalls geringen Mengen an verzweigten bifunktionellen Alkoholen und zusätzlich gegebenenfalls geringen Mengen höherfunktionellen Alkoholen sowie aus aliphatischen bifunktionellen Säuren und/oder aromatischen bifunktionellen Säuren und zusätzlich gegebenenfalls geringen Mengen höherfunktionellen Säuren oder
D) aus einem Esteranteil aus säure- und alkoholfunktionalisierten Bausteinen,
oder einer Mischung oder einem Copolymer aus C) und D), und
E) aus dem Reaktionsprodukt von C) und/oder D) mit aliphatischen und/oder cycloaliphatischen bifunktionellen und zusätzlich gegebenenfalls höherfunktionellen Isocyanaten, gegebenenfalls zusätzlich mit linearen und/oder verzweigten und/oder cycloaliphatischen bifunktionellen und/oder höherfunktionellen Alkoholen,
wobei der Esteranteil C) und/oder D) mindestens 75 Gew.-% und der Anteil an Urethan-Segmenten maximal 25 Gew.-%, bezogen auf die Summe aus C), D) und E) beträgt;
Aliphatisch-aromatische Polyestercarbonate aus
F) einem Esteranteil aus linearen bifunktionellen Alkoholen und/oder gegebenenfalls cycloaliphatischen bifunktionellen Alkoholen und/oder gegebenenfalls geringen Mengen an verzweigten bifunktionellen Alkoholen und zusätzlich gegebenenfalls geringen Mengen höherfunktionellen Alkoholen sowie aus linearen bifunktionellen Säuren und/oder gegebenenenfalls cycloaliphatischen bifunktionellen Säuren und/oder gegebenenfalls geringen Mengen an verzweigten bifunktionellen Säuren und zusätzlich gegebenenfalls geringen Megen höherfunktionellen Säuren oder
G) aus einem Esteranteil aus säure- und alkoholfunktionalisierten Bausteinen,
oder einer Mischung oder einem Copolymer aus F) und G) und
H) einem Carbonatanteil, der aus aromatischen bifunktionellen Phenolen hergestellt wird,
wobei der Esteranteil F) und/oder G) mindestens 70 Gew.-%, bezogen auf die Summe aus F), G) und H) beträgt;
Aliphatische Polyesteramide aus
I) einem Esteranteil aus linearen und/oder cycloaliphatischen sowie gegebenenfalls zusätzlich geringen Mengen an verzweigten bifunktionellen Alkoholen und zusätzlich gegebenenfalls geringen Mengen höherfunktionellen Alkoholen sowie aus linearen und/oder cycloaliphatischen sowie gegebenenfalls zusätzlich geringen Mengen an verzweigten bifunktionellen Säuren und zusätzlich gegebenenfalls geringen Mengen höherfunktionellen Säure, oder
K) aus einem Esteranteil aus säure- und alkoholfunktionalisierten Bausteinen,
oder einer Mischung oder einem Copolymer aus I) und K), und
L) einem Amidanteil aus linearen und/oder cycloaliphatischen sowie gegebenenfalls zusätzlich geringen Mengen an verzweigten bifunktionellen und zusätzlich gegebenenfalls geringen Mengen höherfunktionellen Aminen, sowie aus linearen und/oder cycloaliphatischen sowie gegegebenenfalls zusätzlich geringen Mengen an verzweigten bifunktionellen und zusätzlich gegebenenfalls geringen Mengen höherfunktionellen Säuren, oder
M) aus einem Amidanteil aus säure- und aminfunktionalisierten Bausteinen,
oder einer Mischung aus L) und M) als Amidanteil, wobei
der Esteranteil I) und/oder K) mindestens 30 Gew.-%, bezogen auf die Summe aus I), K), L) und M) beträgt.

3. Formmassen gemäß Anspruch 1, wobei die Menge an Verstärkungsstoffen 0,1 bis 80 Gew.-% beträgt.

4. Formmassen gemäß Anspruch 3, wobei die Menge an Verstärkungsstoffen 10 bis 65 Gew.-% beträgt.

5. Verwendung der Formmassen gemäß Anspruch 1 zur Herstellung von Formkörpern, Formteilen oder Extrudaten.

6. Formkörper, Formteile oder Extrudate, hergestellt aus Formmassen gemäß Anspruch 1.
